# EUROPEAN PATENT SPECIFICATION

(11) **EP 1 936 327 B1**
(45) Date of publication and mention of the grant of the patent: **21.07.2010**
(21) Application number: 06126926.2
(22) Date of filing: 21.12.2006
(51) Int. Cl.: G01C 21/36, G08G 1/0969, G09B 29/10

(54) **User defined zone within a map with associated multimedia data**
Benutzerdefiniertes Gebiet in einer Landkarte mit zugehörigen Multimediadaten
Zone définie par l'utilisateur dans une carte géographique avec des données multimédia associées

(43) Date of publication of application: 25.06.2008
(73) Proprietor: RESEARCH IN MOTION LIMITED, Waterloo, Ontario N2L 3W8 (CA)
(72) Inventor: Martin, Daryl, Paradise Newfoundland & Labrador A1L 2Y6 (CA); O'Keefe, Christopher, St. John's Newfoundland & Labrador A1B4H3 (CA); Hassan, Ahmed, Waterloo Ontario N2J 4T3 (CA)
(74) Representative: Patel, Binesh

(56) References cited:
- US-A1- 2001 041 961
- US-A1- 2002 103 892
- US-B1- 6 618 594

## Description

The present disclosure relates generally to mapping applications and specifically to providing information to users of such applications in accordance with user defined zones.

### BACKGROUND

With the recent advancements of Global Positioning System (GPS) devices, integration between compact GPS receivers and mobile devices, such as cell phones and portable digital assistants (PDAs), is becoming popular. This merger of technology provides many different possibilities for users of the mobile devices, as their devices can perform tasks that were not previously possible. However, in many cases a user interface to GPS functionality in the mobile devices is not as robust as it could be and, in some cases, provides a bad user experience.

One problem in particular is the limitation of displaying longitudinal and latitudinal data to the users as a location on a map. While this is useful when the user needs directions, there are many times when the user does not need directions. Further, there are times when a user may want information in addition to their location on the map. Accordingly, an improved interface is desired so that the experience of interacting with the GPS is cleaner, more fun, and something the user would like to use.

U.S. Publication Number 2002/0103892, filed by Charles J. Rieger III and titled "System for Communicating Through Maps" describes a communication system for transmitting geographically targeted information to a user of a system. Specifically, postings can be made to a predefined geographical region. These postings are then transmitted or made available to users within the region via email or other notification.

U.S. Publication Number 2001/0041961, filed by Jerry S. Feigen and titled "Method and System for Providing End-User Preferences with a Navigation System" describes a navigation system that allows user-customized lists when searching a navigation system. In one example, the user defines a list of preferred cities already present in the navigation system, which are to be presented to the user for searching before other cities in the navigation system. In another example, the user defines a custom area, which is added to the city list. All cities encompassed by the custom area are searched if it is selected. In yet another example, the custom area is not limited to city boundaries.

### SUMMARY

In accordance with an embodiment of the invention there is provided a method for providing a graphical user interface of a mapping application on a mobile device for identifying a predefined custom zone on a map according to claim 4. Claim 1 defines a corresponding system.

In accordance with yet a further embodiment, there is provided a computer readable medium which comprises instructions for executing the method described above.

In accordance with yet a further embodiment, there is provided a system for providing a graphical user interface of a mapping application on a mobile device for identifying a predefined custom zone on a map according to claims 1.

### BRIEF DESCRIPTION OF THE DRAWINGS

Embodiments will now be described by way of example only with reference to the following drawings in which:
**Figure 1** is a block diagram illustrating a telecommunication infrastructure (prior art);
**Figure 2** is a block diagram illustrating components of a mobile device;
**Figure 3** is a flow diagram illustrating the steps for creating a custom zone; and
**Figure 4** is a flow diagram illustrating the steps for displaying the custom zone.

### DETAILED DESCRIPTION OF THE PREFERRED EMBODIMENTS

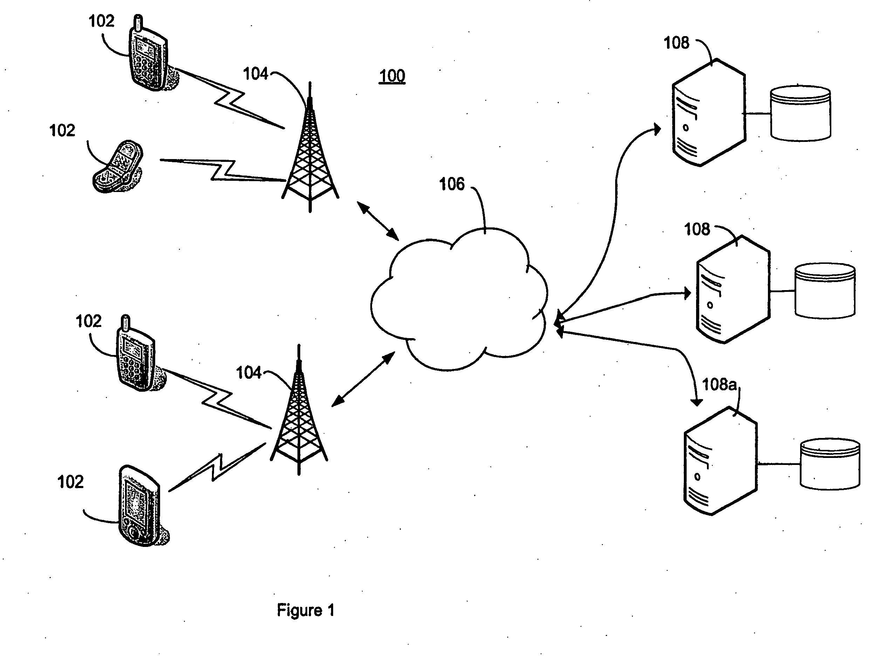

For convenience, like numerals in the description refer to like structures in the drawings. Referring to Figure 1, a typical telecommunication infrastructure is illustrated generally by numeral 100. The telecommunication infrastructure 100 includes a plurality of mobile devices 102, a plurality of base stations 104, a communication network 106 and a plurality of network servers 108.

The mobile devices 102 include wireless computing devices such as a smart phone, a personal digital assistant (PDA), a GPS enabled trip computer in a vehicle and the like. The mobile devices 102 are in communication with one of the base stations 104. The base stations 104 relay data between the mobile devices 102 and the network servers 108 via the communication network 106. Accordingly, the communication network 106 may include several components such as a wireless network, a relay, a corporate server and/or a mobile data server for relaying data between the base stations 104 and the network servers 108.

The network servers 108 include servers such as a Web server, an application server, and an application server with web services. An example of an application server 108 is a location based server 108a. Location based servers 108a use position information relating to a user's location with intelligent applications and solutions to provide relevant information and services to the user. For example, a mapping application executing on the mobile device 102 may retrieve relevant mapping data for presenting to the user. The location based server 108a uses the position of the mobile device 102 to assist in determining the appropriate mapping data to transmit.

It will be appreciated by a person of ordinary skill in the art that the telecommunication infrastructure 100 described herein is exemplary and that changes may be made to one or more components to accommodate different network configurations without affecting the scope of the invention described and claimed herein.

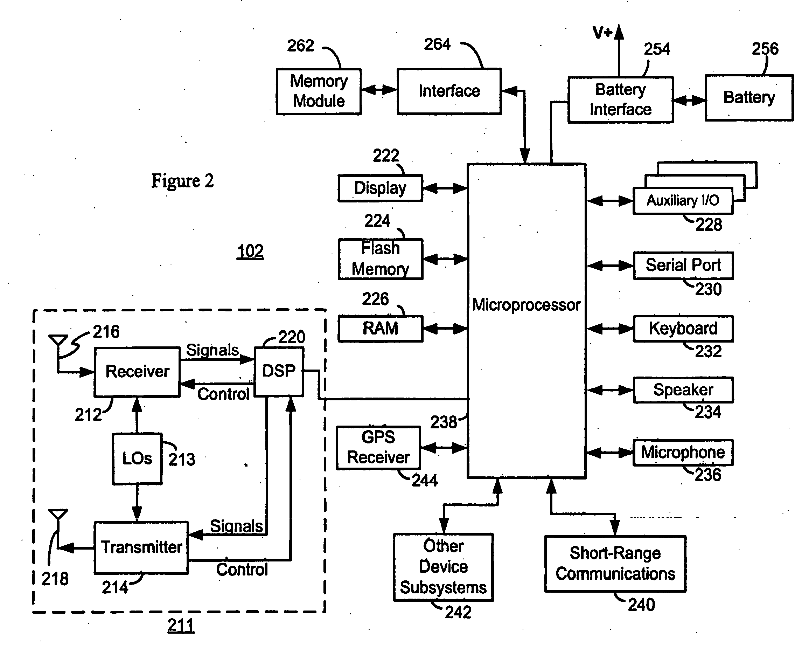

Referring to Figure 2, a mobile device 102 is illustrated in greater detail. The mobile device 102 is often a two-way communication device having both voice and data communication capabilities, including the capability to communicate with other computer systems. Depending on the functionality provided by the mobile device 102, it may be referred to as a data messaging device, a two-way pager, a cellular telephone with data messaging capabilities, a wireless Internet appliance, or a data communication device.

The mobile device 102 includes a communication subsystem 211, which includes a receiver 212, a transmitter 214, and associated components, such as one or more embedded or internal antenna elements 216 and 218, local oscillators (LOs) 213, and a processing module such as a digital signal processor (DSP) 220. As will be apparent to those skilled in field of communications, the particular design of the communication subsystem 211 depends on the communication network in which mobile device 102 is intended to operate.

The mobile device 102 includes a microprocessor 238 which controls general operation of the mobile device 102. The microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240 such as Bluetooth^{™} for example, and any other device subsystems or peripheral devices generally designated at 242. The mobile device 102 also includes a positioning device 244 for receiving positioning information.

The positioning device 244 may be a receiver, such as a GPS receiver for example, for receiving satellite broadcasts. In one embodiment, the satellite broadcast data is used by the mobile device 102 to determine its position. In another embodiment, the satellite broadcast data is transmitted from the mobile device 102 to one of the network servers 108 to determine the position of the mobile device 102. One such technique is known as assisted-GPS. In assisted-GPS, signalling information from a position determining entity is provided to the mobile device 102 to aid in position determination. As long as the mobile device 102 can connect with the network server 108, it can query its location from the network server 108.

Alternatively, the positioning device 244 may comprise a positioning module for receiving positioning information from one of the network servers 108. In this embodiment, the positioning module may comprise a software, rather than a hardware, solution.

Operating system software used by the microprocessor 238 is preferably stored in a persistent store such as the flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

The microprocessor 238, in addition to its operating system functions, preferably enables execution of software applications on the mobile device 102. A predetermined set of applications, which control basic device operations, is installed on the mobile device 102 during its manufacture. These basic operations typically include data and voice communication applications, for example. Additionally, applications may also be loaded onto the mobile device 102 through the network 106, an auxiliary I/O subsystem 228, serial port 230, short-range communications subsystem 240, or any other suitable subsystem 242, and installed by a user in RAM 226, or preferably the persistent store 224, for execution by the microprocessor 238. Such flexibility in application installation increases the functionality of the mobile device 102 and may provide enhanced on-device features, communication-related features, or both.

The display 222 is used to visually present an application's graphical user interface (GUI) to the user. The user can manipulate application data by modifying information on the GUI using an input device such as the keyboard 232 for example. Depending on the type of mobile device 102, the user may have access to other types of input devices, such as, for example, a scroll wheel, trackball, light pen or touch sensitive screen.

In accordance with the present embodiment, a zone application is installed on the mobile device 102 for providing the user with an improved interface for location based services, such as a GPS mapping application. The zone application can be implemented as a standalone, or plug-in, application that interfaces with a pre-existing mapping application or it can be incorporated into a new mapping application, as will be appreciated by a person of ordinary skill in the art.

The zone application provides the user with the ability to define one or more custom zones that are of relevance to the user. Each of the custom zones is defined by the user dynamically assigning a boundary to a region or area of interest. For example, the user can define a home zone comprising a local neighbourhood including the user's home address. As another example, the user can define a work zone comprising a local neighbourhood including the user's work address. Accordingly, it can be seen that the user can define a number of custom zones, as desired.

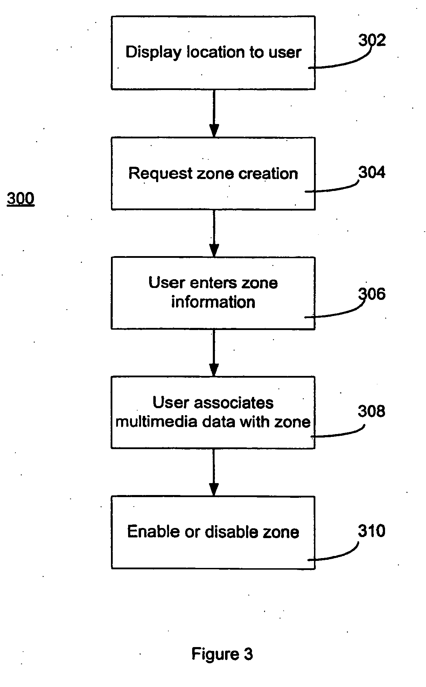

Referring to Figure 3, a flow chart illustrating the steps used to create a custom zone is shown generally by numeral 300. In step 302, the user is presented with graphical or numerical representation of the user's location. In step 304, the user requests creating a custom zone using the zone application on the mobile device 102. As will be appreciated, this step can be implemented a number of different ways using the GUI on the mobile device 102.

In one embodiment, the user can actively seek to create a custom zone by selecting a "Create Zone" option provided in a menu list.

In another embodiment, the zone application can prompt the user with an option to create a custom zone upon arrival at a predefined location. In this embodiment, the zone application can include a list of locations predefined by the user. Alternative, the zone application can interface with a contact application to retrieve a list of locations. The retrieved list of locations may include, for example, all addresses in the contact application. Alternatively, the retrieved list may be filtered in accordance with user preferences.

In step 306, the zone application prompts the user for a name and boundary for defining the custom zone. The user is provided with a plurality of shapes such as a circle, square, rectangle, and the like, that can be used to define the boundary of the custom zone.

The user also provides dimensions of the selected shape to create the custom zone. For example, if the user selects a circle to define the boundary, the user defines the radius of the circle. In the present embodiment, the location of the user when the custom zone is created is used as the centre of each shape. It will, however, be apparent that the centre of the custom zone can be modified by the user so that it does not need to be symmetrical about the user's location. Alternatively, the selected shape is overlaid on the map and the user can manipulate the size and location of the shape using standard graphical manipulation techniques.

In step 308, once the custom zone has been defined, the user can associate one or more of a plurality of different multimedia data with it. For the purpose of the present description, the term multimedia data refers to data that may comprise one or many different forms. Accordingly, some multimedia data may include only one type of data, such as text for example. Conversely, other multimedia data may include a number of different forms such as video (in formats such as avi, mpeg, asf, and the like), audio (in formats such as mp3, wav, midi, cell phone rings and the like), images (in formats such as jpeg, gif, tiff, and the like), and document files (for applications such as Microsoft Word, Microsoft. Excel, Adobe Acrobat and the like) as well as text. The type of data included in the multimedia data associated with each of the custom zone is, primarily, defined by the user. In the present embodiment, the created custom zone and its associated multimedia data are stored in the persistent store on the mobile device 102.

In one example, the user creates a "home" zone for the users home. The user can associate one or more pictures of the home or of the user's family with the home zone. Similarly, the user could supply a task list of tasks to perform around the home. In another example, the user creates a "restaurant" zone for a restaurant. The user can associate one or more pictures of the restaurant with the restaurant zone. Similarly, the user could provide notes on the restaurant, including food quality, service, price and the like.

The multimedia data associated with the custom zone can be created on the mobile device or retrieved from another source. For example, many mobile devices 102 are capable of capturing pictures and/or video. Further, notes can be created using the input device of the mobile device 102. Alternatively, multimedia data can be retrieved via an Internet browser or from e-mail, Multimedia Messaging Service (MMS) messages, and the like, received on the mobile device 102. it will be appreciated that the type of information associated with a custom zone is left to the user's discretion and may be limited only by the capability of the mobile device 102.

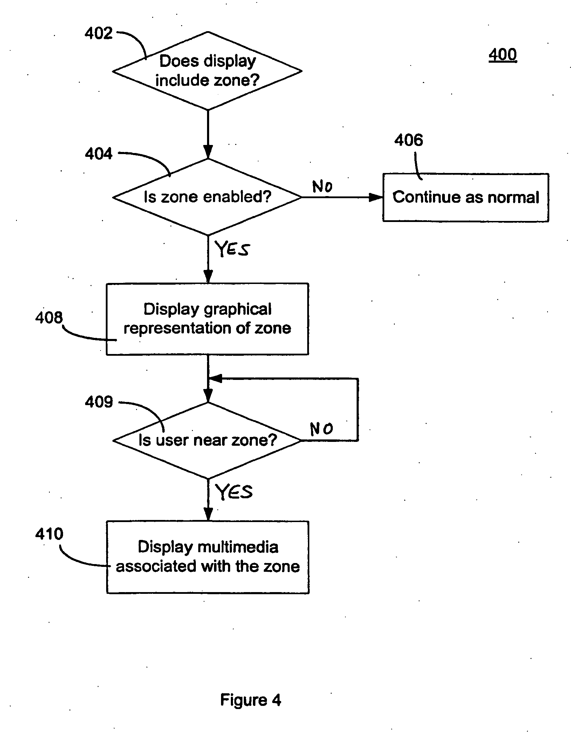

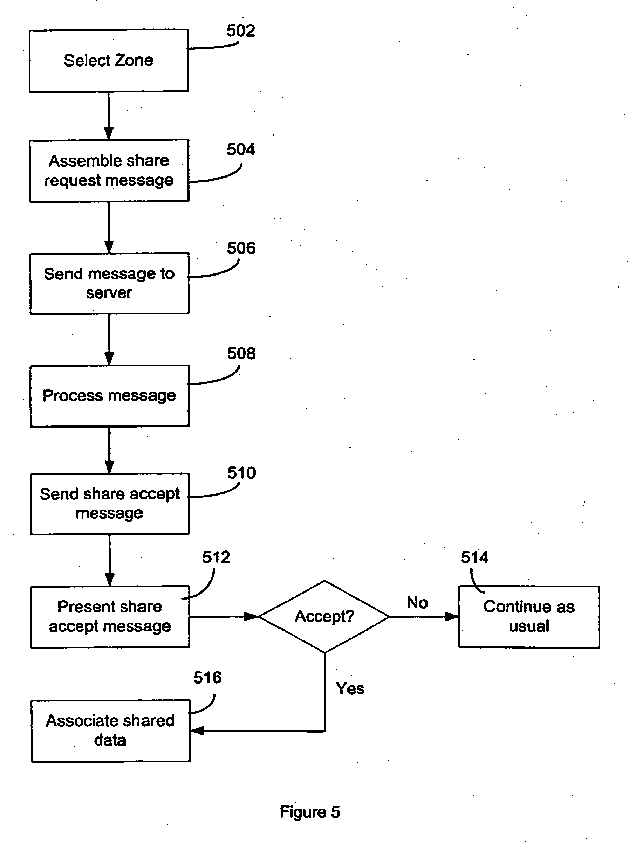

In step 310, the user can choose whether to have the custom zone enabled or disabled. Whether or not the custom zone is enabled will affect the operation of zone application as will be described in detail with reference to Figure 4.

In an alternate embodiment, when the zone application prompts the user for a name and boundary 306, the user is provided with a lasso tool for defining the boundary of the custom zone. A lasso tool is a well known image editing tool that enables the user to perform freehand selection of an irregular shape that does not necessarily conform with a predefined shape.

In yet an alternate embodiment, when the zone application prompts the user for a name and boundary 306, the user defines the boundary of the custom zone by motion. In this embodiment, the mobile device 102 tracks the user's movement to define the boundary of the custom zone. Accordingly, the user is able to create custom zones of any size and shape depending on the movement.

Optionally, for the previous two embodiments, the zone application includes a smoothing/snap feature. Such a feature is common in design applications for completing a custom shape or area. If, for example, the boundary of the custom zone does not end where it started, the custom zone will not encompass an enclosed area. Therefore, the smoothing/snap feature joins the end point of the boundary to the start point of the boundary, creating an enclosed custom zone. The smoothing/snap feature may further modify the custom boundary to form an actual geographic shape if possible and if desired. The actual geographic shape created by the smoothing/snap feature most closely represents the custom shape created by the user.

Once custom zones have been created, they can be used by the zone application to display information, other than basic map information to the user. Referring to Figure 4, a flow chart illustrating the steps used to implement the custom zone in accordance with an embodiment is shown generally by numeral 400.

In step 402, the zone application determines when an area defined by one of the custom zones is displayed on the screen of the mobile device 102 as a result of tracking or panning. That is, depending on the scale of the map being displayed by the mapping application, the zone application determines when a portion of the map being displayed includes a custom zone.

In step 404, the zone application determines whether or not the custom zone is enabled.

If the custom zone is disabled, the zone application continues to step 406 and the area represented by the custom zone is displayed on the screen in a matter that is standard for the mapping application.

If the custom zone is enabled, the zone application continues to step 408 and displays a graphical representation of the area represented by the custom zone in order to identify the custom zone to the user. As will be appreciated, how the custom zone is represented can very depending on user preferences, zone application specifics, and the definition of the custom zone itself. In one embodiment, the custom zone boundary defined by the user is shaded or coloured on the map. In another embodiment, the custom zoned is represented on the map by an icon. For example, the "home" zone can be represented by a house icon and the "work'' zone can be represented by a building icon.

In step 409, once the representation of the custom zone is shown on the map, the user navigates toward the custom zone. In the present embodiment this can be achieved in two ways. In a first approach, the user can physically travel to the custom zone. The mapping application tracks the user's progress and determines when the user enters the custom zone. In a second the user can pan the map to the location of the custom zone.

In step 410, the multimedia data associated with the custom zone is presented to the user. It will be appreciated that the multimedia data may be presented when the user is within a predefined distance of the custom zone or when the user is within the boundary of the custom zone. As previously described, the multimedia data may include, for example, pictures, video, descriptions, address information and other predefined information.

Further, as will be appreciated, the multimedia data may be displayed to the user a number of different ways. In one embodiment, the multimedia data replaces the map on the display of the mobile device 102. In another embodiment, the multimedia data is overlaid on top of the map. In this embodiment, the map may be faded or dimmed so that it does not detract too much attention from display of the multimedia data. For both of these embodiments, the user is optionally provided with a button, hot-key, or other input option via the GUI to return to a "map only" view.

Accordingly, it will be appreciated that the embodiments as described above provide the user with an enjoyable interface to the mapping application that provides custom information in addition to positioning information.

Although the previous embodiments described creating a location on the mobile device, it will be appreciated that the zones can be created "remotely", for example at the user's primary computer. In such an example, the custom zones can be loaded onto the mobile device 102 over-the-air or by a wired connection such a Universal Serial Bus (USB) cable when the mobile device 102 is synchronized with the user's primary computer.

Further, although the previous embodiments provide examples of relatively small custom zones, such as the user's home, work or a restaurant, it will be appreciated that the size of the custom zone can vary, as defined by the user when creating the custom zone.

Yet further, the previous embodiments describe a zone application in which the custom zones and their associated multimedia data are stored on the mobile device 102. In an alternate embodiment, the multimedia data and/or custom zone definition information are stored on a central data store, such as the server 108 or the location based server 108a, for example, or in a database readily accessible by the server 108 or the location based server 108a. Each user is provided with an account and assigned a storage area for storing their information. Storing the multimedia data and/or custom zone definition information at the location based server 108b provides the ability to store more data than storing it on the mobile device 102. Memory space on many mobile devices 102 is limited and relatively expensive compared to storage on servers 108. Accordingly, the user would be able to define a large number of custom zones and associate much multimedia data with each custom zone.

Once the custom zone has been created, custom zone definition information and its corresponding multimedia data are delivered to the location based server 108a. The user can add or modify the multimedia data, or make modifications to the custom zone definition, which will be delivered to the location based server 108a as an update.

In one embodiment, standard text data such as the GPS coordinates, the boundaries, notes, addresses and the like are delivered to the location based server 108a over-the-air. More bandwidth intense data such as pictures and video, for example, are delivered to the location based server 108a via a broadband connection, using a wireless or a wired connection. For example, if the mobile device 102 has Wi-Fi capability, a Wi-Fi hotspot or other connection is used to transfer the data. Alternatively, a wired connection such as USB or Firewire cable to a computer having a broadband network connection may be used to transfer the data.

In an alternate embodiment, both the standard text data and the bandwidth intense data are delivered to the location based server 108a over-the-air. In yet an alternate embodiment, both the standard text data and the bandwidth intense data are delivered to the location based server 108a via a broadband connection.

The location based server 108a stores the data for retrieval by the mobile device 102. Optionally, the location based server 108a compresses any images and/or video to thumbnails and/or a resolution compatible with the mobile device 102. It will be appreciated by a person skilled in the art that a picture or video used for a custom zone may exceed the resolution capabilities of the mobile device 102. Accordingly, the location based server 108a prepares a version of such files that are optimized for the mobile device 102. The original version is maintained on the location based server 108a, should the user request access to it.

Once the custom zone information and its associated multimedia data is synchronized between the mobile device 102 and the location based server 108a, the information can be removed from the mobile device 102 if desired.

In the present embodiment, the location based server 108a includes a version of the zone application executing in parallel with, or as part of, its mapping service application. Accordingly, when the location based server 108a sends mapping data to the mobile device 102, it follows step 402 - 408 described with reference to Figure 4.

The zone application determines when an area defined by one of the custom zones is to be displayed on the screen of the mobile device 102. That is, in accordance with the user's location, does the mapping information to be sent to the mobile device 102 include a custom zone.

If the custom zone is located within the mapping data to be sent, the zone application determines whether or not the custom zone is enabled. If the custom zone is disabled, the custom zone is treated the same as the rest of the mapping information. If the custom zone is enabled, the zone application provides a graphical representation of the custom zone as part of the mapping information.

In the present embodiment, the zone application also transmits the multimedia data associated with the custom zone. In an alternate embodiment, the location based server 108b communicates with the mobile device 102 to determine whether or not the multimedia data is already cached on the mobile device 102. If the multimedia data is cached, it is not retransmitted unless explicitly requested by the user.

In the embodiment described above, the custom zone information is stored on the location based server 108a and the mobile device 102 determines when the user approaches a custom zone. In an alternate embodiment, the location based server 108a determines when the user approaches a custom zone. This embodiment reduces the demands of the mobile device 102, as it would not require that the zone application be installed on the mobile device 102 nor that the mobile device 102 be aware of the custom zone.

It will be appreciated that by storing the custom zone definition information and associated multimedia data on a central server, size limitations of memory intensive media are reduced. Further, the mobile device 102 is fault tolerant as the custom zones are saved remotely and associated with the user. Yet further, the user can switch mobile devices 102 or work on a personal computer to create or view the custom zones.

Although a number of different embodiments are described above, it be appreciated by a person of ordinary skill in the art that various combinations of the different embodiments may also be implemented.

Further, although the invention has been described with reference to certain specific embodiments, various modifications thereof will be apparent to those skilled in the art without departing from the scope of the invention, as defined by the appended claims.

## Claims

1. A system (102, 108, 108a) for providing a graphical user interface of a mapping application on a mobile device (102) for identifying a predefined custom zone on a map, the system comprising a processor (238) configured to implement the steps of:
determining (402) that the custom zone is included in a portion of the map to be displayed by the mapping application;
retrieving (410) multimedia data associated with the custom zone for display ; and
automatically presenting (409) the multimedia data via the graphical user interface on a display (222) of the mobile device when the mobile device (102) is within a boundary of the custom zone, or when the map is graphically manipulated to be within a boundary of the custom zone.

2. The system of claim 1 being implemented at a combination of the mobile device (102) and a server (108, 108a), wherein step of presenting the multimedia for display comprises transmitting the multimedia data to the mobile device (102) for display, or being implemented at the mobile device alone.

3. The system of any one of claims 1 to 2 wherein the multimedia data includes at least one of video, audio, image, document file, or text data.

4. A method for providing a graphical user interface of a mapping application on a mobile device (102) for identifying a predefined custom zone on a map, the method comprising the steps of:
determining (402) that the custom zone is included in a portion of the map to be displayed by the mapping application;
retrieving (410) multimedia data associated with the custom zone for display ; and
automatically presenting (409) the multimedia data via the graphical user interface on a display (222) of the mobile device when the mobile device (102) is within a boundary of the custom zone, or when the map is graphically manipulated to be within a boundary of the custom zone.

5. The method of claim 4 comprising the further step of displaying (408) a visual indicator to illustrate the custom zone.

6. The method of claim 5, wherein the visual indicator is displayed by shading an area defined by the custom zone, or by presenting an icon at the custom zone.

7. The method of any one of claims 4 to 6 comprising the further step of determining (404) whether the custom zone is enabled or disabled and only retrieving the multimedia data if the custom zone is enabled.

8. The method of claim any one of claims 4 to 7, wherein the step of determining that the custom zone is included in a portion of the map is performed at a server (108, 108a) remote from the mobile device (102).

9. The method of claim 8, wherein custom zone information and the multimedia data are stored at the server (108, 108a).

10. The method of claim 9 comprising the further step of transmitting the custom zone information to the mobile device (102) along with standard mapping information.

11. The method of claim 10 comprising the further step of determining whether the custom zone is enabled or disabled and only transmitting the custom zone information to the mobile device if the custom zone is enabled.

12. The method of any one of claims 9 to 11 comprising the further step of creating a scaled version of the multimedia data in accordance with the capability of the mobile device (102) and transmitting the scaled multimedia data along with standard mapping information.

13. The method of any one of claims 9 to 12 wherein the custom zone information and the multimedia information are synchronized between the mobile device and the server over-the-air, or between the mobile device (102) and the server (108, 108a) using a broadband connection.

14. The method of claim 13 wherein the broadband connection is wireless.

15. The method of any one of claims 4 to 14 wherein the multimedia data includes at least one of video, audio, image, document file, or text data.

16. A computer readable medium comprising instructions which, when executed on a computing system comprising a mobile device cause the computing system to implement the method of any one of claims 4 to 15.

## Patentansprüche

1. System (102, 108, 108a) zum Bereitstellen einer grafischen Benutzerschnittstelle einer Kartenanwendung auf einer Mobilvorrichtung (102) zum Festlegen einer vorbestimmten benutzerdefinierten Zone auf einer Karte, wobei das System einen Prozessor (238) aufweist, der dazu konfiguriert ist,
zu bestimmen (402), dass die benutzerdefinierte Zone in einem Abschnitt der von der Kartenanwendung anzuzeigenden Karte eingeschlossen ist,
mit der benutzerdefinierten Zone zur Anzeige verbundene Multimediadaten abzufragen (410) und
automatisch die Multimediadaten über die grafische Benutzerschnittstelle auf einer Anzeige (222) der Mobilvorrichtung darzustellen (409), wenn sich die Mobilvorrichtung (102) innerhalb einer Grenze der benutzerdefinierten Zone befindet oder wenn die Karte grafisch beeinflusst ist, dass sie sich innerhalb einer Grenze der benutzerdefinierten Zone befindet.

2. System nach Anspruch 1, das an einer Kombination der Mobilvorrichtung (102) und eines Server (108, 108a) implementiert ist, wobei beim Darstellen der Multimediadaten zum Anzeigen die Multimediadaten an die Mobilvorrichtung (102) zum Anzeigen gesendet werden, oder das an der Mobilvorrichtung alleine implementiert ist.

3. System nach Anspruch 1 oder 2, wobei die Multimediadaten mindestens Video-, Audio-, Bild-, Dokumentdatei- oder Textdaten enthalten.

4. Verfahren zum Bereitstellen einer grafischen Benutzerschnittstelle einer Kartenanwendung auf einer Mobilvorrichtung (102) zum Festlegen einer vorbestimmten benutzerdefinierten Zone auf einer Karte, wobei in dem Verfahren
bestimmt (402) wird, dass die benutzerdefinierte Zone in einem Abschnitt der von der Kartenanwendung anzuzeigenden Karte eingeschlossen ist,
mit der benutzerdefinierten Zone zur Anzeige verbundene Multimediadaten abgefragt (410) werden und
automatisch die Multimediadaten über die grafische Benutzerschnittstelle auf einer Anzeige (222) der Mobilvorrichtung dargestellt (409) werden, wenn die Mobilvorrichtung (102) innerhalb einer Grenze der benutzerdefinierten Zone ist oder wenn die Karte grafisch beeinflusst ist, dass sie sich innerhalb einer Grenze der benutzerdefinierten Zone befindet.

5. Verfahren nach Anspruch 4, in dem ferner ein optischer Hinweis angezeigt (408) wird, um die benutzerdefinierte Zone darzulegen.

6. Verfahren nach Anspruch 5, wobei der optisch Hinweis angezeigt wird, indem ein von der benutzerdefinierten Zone festgelegter Bereich schattiert oder ein Symbol an der benutzerdefinierten Zone dargestellt wird.

7. Verfahren nach einem der Ansprüche 4 bis 6, in dem ferner bestimmt (404) wird, ob die benutzerdefinierte Zone aktiviert oder deaktiviert ist, und die Multimediadaten nur abgefragt werden, wenn die benutzerdefinierte Zone aktiviert ist.

8. Verfahren nach einem der Ansprüche 4 bis 7, wobei das Bestimmen, dass die benutzerdefinierte Zone in einem Abschnitt der Karte eingeschlossen wird, an einem von der Mobilvorrichtung (102) entfernten Server (108, 108a) ausgeführt wird.

9. Verfahren nach Anspruch 8, wobei Informationen der benutzerdefinierten Zone und die Multimediadaten auf dem Server (108, 108a) gespeichert werden.

10. Verfahren nach Anspruch 9, in dem ferner die Informationen der benutzerdefinierten Zone zusammen mit Standardkarteninformationen an die Mobilvorrichtung (102) gesendet werden.

11. Verfahren nach Anspruch 10, in dem ferner bestimmt wird, ob die benutzerdefinierte Zone aktiviert oder deaktiviert ist, und die Informationen der benutzerdefinierten Zone an die Mobilvorrichtung nur gesendet werden, wenn die benutzerdefinierte Zone aktiviert ist.

12. Verfahren nach einem der Ansprüche 9 bis 11, in dem ferner eine skalierte Version der Multimediadaten in Übereinstimmung mit den Fähigkeiten der Mobilvorrichtung (102) erzeugt wird und die skalierten Multimediadaten zusammen mit den Standardkarteninformationen gesendet werden.

13. Verfahren nach einem der Ansprüche 9 bis 12, wobei die Informationen der benutzerdefinierten Zone und die Multimediainformationen zwischen der Mobilvorrichtung und dem Server über Funk oder zwischen der Mobilvorrichtung (102) und dem Server (108, 108a) unter Verwendung einer Breitbandverbindung synchronisiert werden.

14. Verfahren nach Anspruch 13, wobei die Breitbandverbindung drahtlos ist.

15. Verfahren nach einem der Ansprüche 4 bis 14, wobei die Multimediadaten mindestens Video-, Audio-, Bild-, Dokumentdatei- der Textdaten einschließen.

16. Computerlesbares Medium mit Befehlen, die, wenn sie auf einem Rechensystem ausgeführt werden, das eine Mobilvorrichtung enthält, das Rechensystem dazu veranlasst, das Verfahren nach einem der Ansprüche 4 bis 15 durchzuführen.

## Revendications

1. Système (102, 108, 108a) destiné à fournir une interface utilisateur graphique d'une application cartographique sur un dispositif mobile (102) afin d'identifier une zone personnalisée prédéfinie sur une carte, le système comprenant un processeur (238) configuré pour mettre en oeuvre les étapes qui consistent à :
déterminer (402) que la zone personnalisée est contenue dans une partie de la carte devant être affichée par l'application cartographique ;
récupérer (410) des données multimédia associées à la zone personnalisée pour affichage ; et
présenter (409) automatiquement les données multimédia à travers l'interface utilisateur graphique sur un écran (222) du dispositif mobile lorsque le dispositif mobile (102) se trouve à l'intérieur d'une frontière de la zone personnalisée, ou lorsque la carte est manipulée de manière graphique pour se trouver à l'intérieur d'une frontière de la zone personnalisée.

2. Système de la revendication 1, qui est mis en oeuvre au niveau d'une combinaison du dispositif mobile (102) et d'un serveur (108, 108a), dans lequel l'étape qui consiste à présenter les données multimédia pour affichage comprend le fait de transmettre les données multimédia au dispositif mobile (102) pour affichage, ou qui est mis en oeuvre au niveau du dispositif mobile seulement.

3. Système de l'une quelconque des revendications 1 à 2, dans lequel les données multimédia comportent au moins l'une parmi des données textuelles, document, image, audio et vidéo.

4. Procédé destiné à fournir une interface utilisateur graphique d'une application cartographique sur un dispositif mobile (102) afin d'identifier une zone personnalisée prédéfinie sur une carte, le procédé comprenant les étapes qui consistent à :
déterminer (402) que la zone personnalisée est contenue dans une partie de la carte devant être affichée par l'application cartographique ;
récupérer (410) des données multimédia associées à la zone personnalisée pour affichage ; et
présenter (409) automatiquement les données multimédia à travers l'interface utilisateur graphique sur un écran (222) du dispositif mobile lorsque le dispositif mobile (102) se trouve à l'intérieur d'une frontière de la zone personnalisée, ou lorsque la carte est manipulée de manière graphique pour se trouver à l'intérieur d'une frontière de la zone personnalisée.

5. Procédé de la revendication 4 comprenant l'étape supplémentaire qui consiste à afficher (408) un indicateur visuel afin d'illustrer la zone personnalisée.

6. Procédé de la revendication 5, dans lequel l'indicateur visuel est affiché en ombrageant une surface définie par la zone personnalisée ou en présentant une icône au niveau de la zone personnalisée.

7. Procédé de l'une quelconque des revendications 4 à 6, comprenant l'étape supplémentaire qui consiste à déterminer (404) si la zone personnalisée est activée ou désactivée et à ne retirer les données multimédia que si la zone personnalisée est activée.

8. Procédé de l'une quelconque des revendications 4 à 7, dans lequel l'étape qui consiste à déterminer que la zone personnalisée est contenue dans une partie de la carte est exécutée au niveau d'un serveur (108, 108a) distant du dispositif mobile (102).

9. Procédé de la revendication 8, dans lequel des informations concernant la zone personnalisée et les données multimédia sont stockées au niveau du serveur (108, 108a).

10. Procédé de la revendication 9, comprenant l'étape supplémentaire qui consiste à transmettre les informations concernant la zone personnalisée au dispositif mobile (102) en même temps que des informations cartographiques standard.

11. Procédé de la revendication 10, comprenant l'étape supplémentaire qui consiste à déterminer si la zone personnalisée est activée ou désactivée et à ne transmettre les informations concernant la zone personnalisée au dispositif mobile que si la zone personnalisée est activée.

12. Procédé de l'une quelconque des revendications 9 à 11, comprenant l'étape supplémentaire qui consiste à créer une version proportionnée des données multimédia en accord avec la capacité du dispositif mobile (102) et à transmettre les données multimédia proportionnées en même temps que les informations cartographiques standard.

13. Procédé de l'une quelconque des revendications 9 à 12, dans lequel les informations concernant la zone personnalisée et les informations multimédia sont synchronisées entre le dispositif mobile et le serveur en liaison radio ou entre le dispositif mobile (102) et le serveur (108, 108a) en utilisant une connexion large bande.

14. Procédé de la revendication 13, dans lequel la connexion large bande est une liaison sans fil.

15. Procédé de l'une quelconque des revendications 4 à 14, dans lequel les données multimédia comportent au moins l'une parmi des données textuelles, document, image, audio ou vidéo.

16. Support lisible par ordinateur, comprenant des instructions qui, lorsqu'elles sont exécutées sur un système informatique comprenant un dispositif mobile, amènent le système informatique à mettre en oeuvre le procédé de l'une quelconque des revendications 4 à 15.
